# EUROPEAN PATENT APPLICATION

(11) **EP 4 498 032 A2**
(43) Date of publication of application: **29.01.2025**
(21) Application number: 24184971.0
(22) Date of filing: 27.06.2024
(51) Int. Cl.: G01B 5/00, G01B 5/30, G01N 3/08

(54) **EXTENSOMETER STRUCTURE WITH SPACED APART FLEXURES**

(30) Priority: 28.06.2023 US 202363510821 P
(71) Applicant: Illinois Tool Works Inc., Glenview IL 60025 (US)
(72) Inventor: MEYER, Richard A., Glenview, 60025 (US); ROGOTZKE, Riley August, Glenview, 60025 (US)
(74) Representative: HGF

(57) **Abstract**

An extensometer structure includes a flexure assembly having a support mount, a first contact device mount rigidly fixed to the support mount and a second contact device mount coupled to the support mount by an upper flexure arm and a lower flexure arm. The upper flexure arm is spaced apart from and arranged directly above and in alignment with the lower flexure arm. The second contact device mount is configured to vertically travel relative to the first contact device mount.

## Description

### BACKGROUND

The discussion below is merely provided for general background information and is not intended to be used as an aid in determining the scope of the claimed subject matter.

Extensometers are commonly used for measuring strain in a test specimen. Numerous forms of extensometers have been advanced in the art. One type of extensometer is contact extensometers that contact a test specimen that is being subject to loads to determine specimen properties. The strain is sensed by contact probes which engage the specimen at contact points and extend to a sensor system support by way of a flexure assembly. The flexure assembly allows the probes to move with respect to each other to measure strain in the test specimen.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An extensometer structure includes a flexure assembly having a support mount, a first contact device mount rigidly fixed to the support mount and a second contact device mount coupled to the support mount by an upper flexure arm and a lower flexure arm. The upper flexure arm is spaced apart from and arranged directly above and in alignment with the lower flexure arm. The second contact device mount is configured to vertically travel relative to the first contact device mount.

The extensometer structure may include a first contact probe having a contact surface and being fastened to the first contact device mount and a second contact probe having a contact surface and being fastened to the second contact device mount, where the second contact probe is configured to vertically travel in a substantially parallel manner relative to the first contact probe.

The first contact probe and the second contact probe may include first and second elongated rods, where the first elongated rod is mounted to the first contact device mount and extends from a contact surface along an underside of first contact device mount and an under side of the support mount and terminates at a proximal end and where the second elongated rod is mounted to the second contact device mount and extends from a contact surface through a slot in the second contact device mount, between the upper and lower flexure arms and through a slot in the support mount to a proximal end.

The first contact probe and the second contact probe may include first and second knife-edge blades, where the first knife-edge blade is mounted to a front end and underside of first contact device mount by a blade mount and second knife-edge blade is clamped into a slot that is recessed from a front face of the second contact device mount.

The flexure assembly further may include at least one overtravel stop. The at least one overtravel stop may include a first overtravel stop mounted to the first contact device mount and having a first flange with a free end that moves within a first groove recessed in the second contact device mount and a second overtravel stop mounted to the first contact device mount and having a second flange with a free end that moves within a second groove recessed in the second contact device mount. The first and second overtravel stops provide limited travel of the second contact device mount relative to the first contact device mount.

The upper flexure arm may include a first flexure strap, a second flexure strap and a rigid interconnecting section coupling the first flexure strap to the second flexure strap and where the lower flexure arm may include a first flexure strap, a second flexure strap and a rigid interconnecting section coupling the first flexure strap to the second flexure strap.

The extensometer structure may include one or more sensors configured to sense movement of the second contact device mount relative to the first contact device mount. For example, the one or more sensors may include four strain gauge sensors, where first and second strain gauge sensors are positioned on the upper flexure arm and where third and fourth strain gauge sensors are positioned on the lower flexure arm. In another embodiment, the one or more sensors may include eight strain gauge sensors, where first, second, third and fourth strain gauge sensors are positioned on upper surfaces and lower surfaces of the upper flexure arm and where fifth, sixth, seventh and eighth strain gauge sensors are positioned on upper and lower surfaces of the lower flexure arm.

An extensometer structure includes a first contact probe having a contact surface, a second contact probe having a contact surface and being movably connected to the first contact probe and a flexure assembly. The flexure assembly includes a support mount, a first contact device mount rigidly fixed to the support mount and configured to support the first contact probe. The first contact probe is mounted to the first contact device mount. A second contact device mount is coupled to the support mount by an upper flexure arm and a lower flexure arm. The second contact probe is mounted to the second contact device mount. The second contact device mount is configured to vertically travel relative to the first contact device mount and wherein the second contact probe is configured to vertically travel relative to the first contact probe.

The first contact probe and the second contact probe may include first and second elongated rods, where the first elongated rod is mounted to the first contact device mount and extends from the contact surface of the first elongated rod along an underside of first contact device mount and an under side of the support mount and terminates at a proximal end and where the second elongated rod is mounted to the second contact device mount and extends from the contact surface of the second elongated rod through a slot in the second contact device mount, between the upper and lower flexure arms and through a slot in the support mount to a proximal end. The flexure assembly further may include at least one overtravel stop. Also, the upper flexure arm can be spaced apart from and arranged directly above and in alignment with the lower flexure arm.

The upper flexure arm may include a first flexure strap, a second flexure strap and an interconnecting section coupling the first flexure strap to the second flexure strap and where the lower flexure arm may include a first flexure strap, a second flexure strap and an interconnecting section coupling the first flexure strap to the second flexure strap.

One or more sensors can be configured to sense movement of second contact device mount relative to the first contact device mount, wherein the one or more sensors are positioned on the upper flexure arm and the lower flexure arm. The one or more sensors can be positioned on the upper flexure arm and the lower flexure arm.

An extensometer assembly includes an extensometer structure having a first elongated rod extending from a contact surface to a proximal end, a second elongated rod extending from a contact surface to a proximal end and a flexure assembly having at least one flexure arm. The flexure assembly includes a support mount, a first contact device mount rigidly fixed to the support mount and a second contact device mount coupled to the support mount by the at least one flexure arm. The first elongated rod is mounted to the first contact device mount and the second elongated rod is mounted to the second contact device mount. The extensometer assembly further includes a hold down system coupled to the proximal ends of the first and second elongated rods to provide a lifting force and contacting force.

The at least one flexure arm may include an upper flexure arm and a lower flexure arm, the upper flexure arm being spaced apart from and in alignment with the lower flexure arm.

The first elongated rod can extend from the contact surface of the first elongated rod along an underside of first contact device mount and an underside of the support mount and terminates at the proximal end of the first elongated rod and the second elongated rod can extend from the contact surface of the second elongated rod through a slot in the second contact device mount, between the upper and lower flexure arms and through a slot in the support mount to the proximal end of the second elongated rod.

One or more sensors can be configured to sense movement of second contact device mount relative to the first contact device mount, wherein the one or more sensors are positioned on the upper flexure arm and the lower flexure arm. The one or more sensors can be positioned on the upper flexure arm and the lower flexure arm.

### BRIEF DESCRIPTION OF THE DRAWINGS

FIG. 1 is a front perspective view of an extensometer according to an embodiment.
FIG. 2 is a back perspective view of the extensometer illustrated in FIG. 1.
FIG. 3 is a top, front perspective view of an extensometer structure of the extensometer illustrated in FIGS. 1 and 2.
FIG. 4 is a top, back perspective view of FIG. 3.
FIG. 5 is a bottom, back perspective view of FIG. 3.
FIG. 6 is a front view of FIG. 3.
FIG. 7 is a top, front perspective section view taken through the section line indicated in FIG. 6.
FIG. 8 is a top, front perspective view of a sensing assembly according to an embodiment and configured for use in the extensometer illustrated in FIGS. 1 and 2 and including the extensometer structure illustrated in FIG. 3.
FIG. 9 is a bottom perspective view of a portion of the sensing assembly illustrated in FIG. 8.
FIG. 10 is a schematic diagram of the portion of the sensing assembly illustrated in FIG. 9.
FIG. 11 is a schematic diagram of a sensing circuit that corresponds with the sensing assembly illustrated in FIG. 10.
FIG. 12 is a top, front perspective view of a sensing assembly according to another embodiment and configured for use in the extensometer illustrated in FIGS. 1 and 2 and including the extensometer structure illustrated in FIG. 3.
FIG. 13 is a bottom perspective view of a portion of the sensing assembly illustrated in FIG. 12.
FIG. 14 is a schematic diagram of the sensing assembly of FIG. 12.
FIG. 15 is a schematic diagram of a sensing circuit that corresponds with the sensing assembly illustrated in FIG. 14.
FIG. 16 is a top, back perspective view of the extensometer structure of FIG. 3 and a back assembly of the extensometer illustrated in FIGS. 1 and 2 according to an embodiment.
FIG. 17 is a top, side perspective view of FIG. 16.
FIG. 18 is a top, front perspective view of the extensometer structure and a hold down system of the extensometer illustrated in FIGS. 16 and 17.
FIG. 19 is a back view of FIG. 18.
FIG. 20 is a section view taken through the section line indicated in FIG. 18.
FIG. 21 is a top perspective view of an extensometer structure of an extensometer according to another embodiment.

### DETAILED DESCRIPTION OF ILLUSTRATIVE EMBODIMENTS

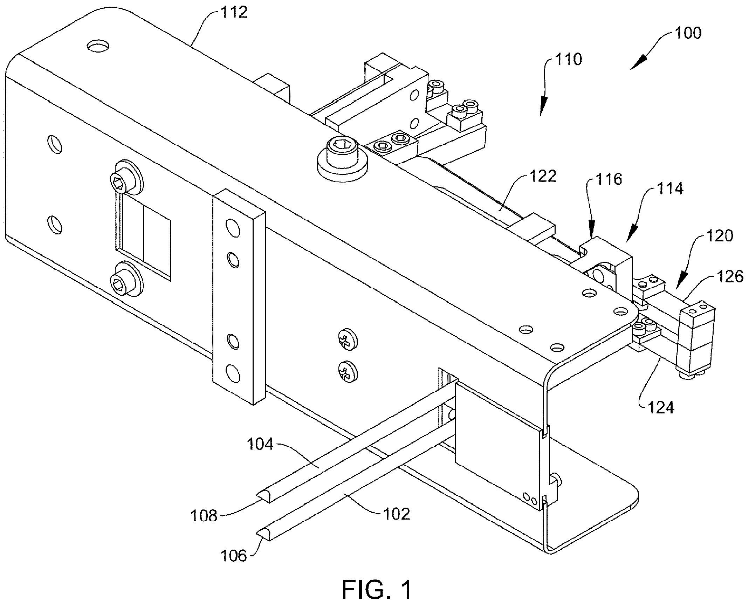

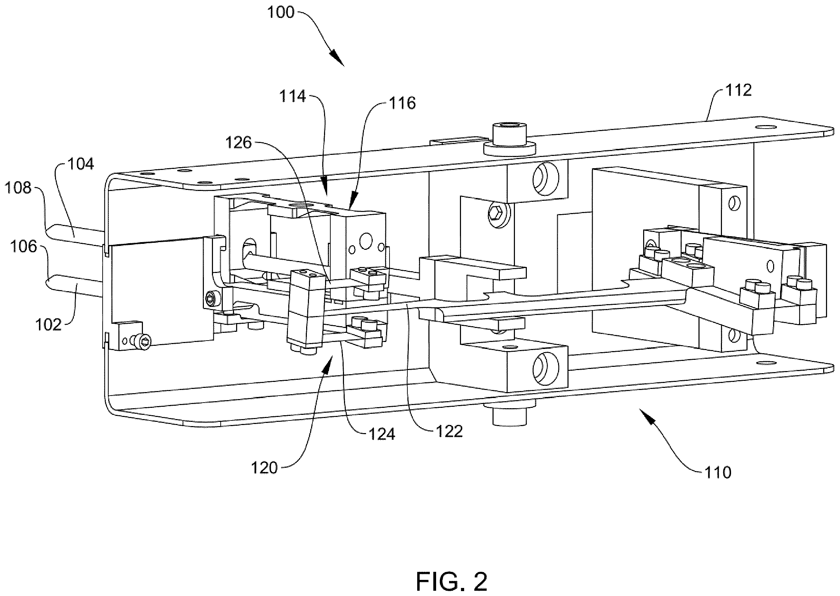

Contact extensometers measure the deformation of a sample specimen by directly placing contact probes onto a specimen, such as but not limited to ends of elongated ceramic rods or knife-edge blades, and coupling the contact probes to a flexure assembly to allow at least one of the contact probes to move in response to compression or elongation of the test specimen. FIG. 1 is a front perspective view of a contact extensometer assembly 100 according to an embodiment. FIG. 2 is a back perspective view of contact extensometer assembly 100. Extensometer assembly 100 is one embodiment of an exemplary high temperature extensometer assembly configured to measure axial strain in high temperature tension, compression and through zero fatigue testing applications such as but not limited to 2200 degrees Fahrenheit. Contact extensometer assembly 100 senses strain by having exemplary first and second contact probes or elongated rods 102 and 104, made with, for example, ceramic, which engage a specimen at contact points or contact surfaces located at distal ends 106 and 108 of respective rods 102 and 104. Rods 102 and 104 extend to a back assembly 110 that is remote and shielded from high temperatures by a shield 112. Back assembly 110 provides the contact force on the specimen and a lift support to the rods 102 and 104.

Extensometer assembly 100 includes an extensometer structure 114 and, in one embodiment, has a first lower elongated rod 102, a second upper elongated rod 104 and a flexure assembly 116. As used herein the "extensometer structure" is defined as being at least some of the interconnected mechanical components and does not include any sensing device for measuring movement of components of the extensometer structure. Rather, various types of sensing devices as are well-known can be used with the extensometer structure disclosed herein to form an operable extensometer that provides an output signal indicative of displacement such as elongation of a test specimen.

As mentioned, extensometer structure 114 is supported by back assembly 110, which includes a hold down system 120 that is configured to exert a contact force on the specimen through extensometer structure 114 and provide a lifting force to extensometer structure 114. As shown in FIG. 2, hold down system 120 includes a support bridge 122 that couples to a lower flexible bridge 124 and an upper flexible bridge 126. Lower flexible bridge 124 couples to a proximal end (not shown in FIGS. 1 and 2) of first elongated rod 102 and upper flexible bridge 126 couples to a proximal end (not shown in FIGS. 1 and 2) of second elongated rod 104. In this embodiment, the extensometer structure 114 provides a contact force upon the test specimen through the rods 102 and 104. Back assembly 110 will be discussed in more detail below.

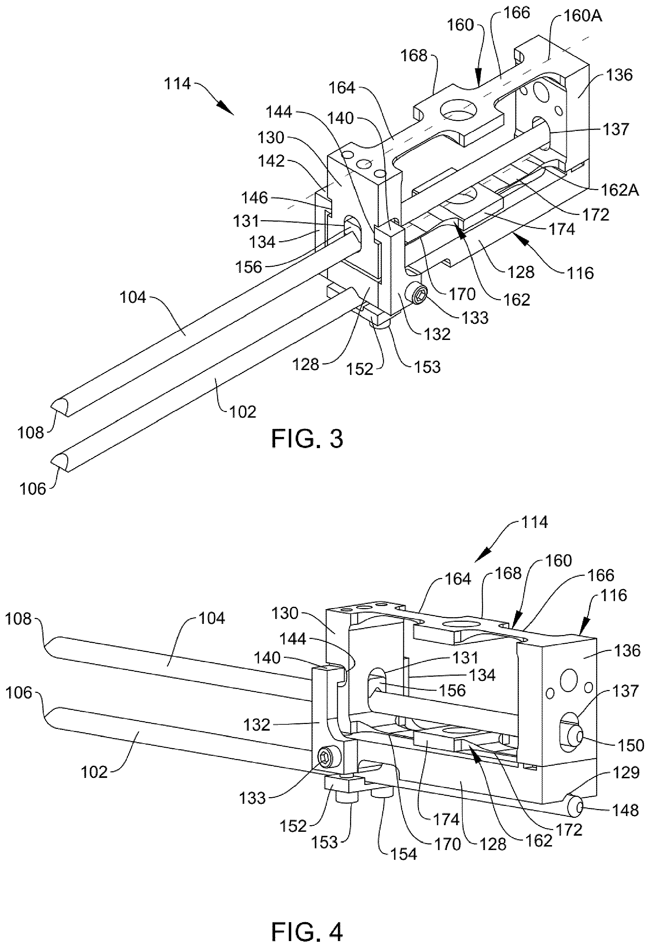

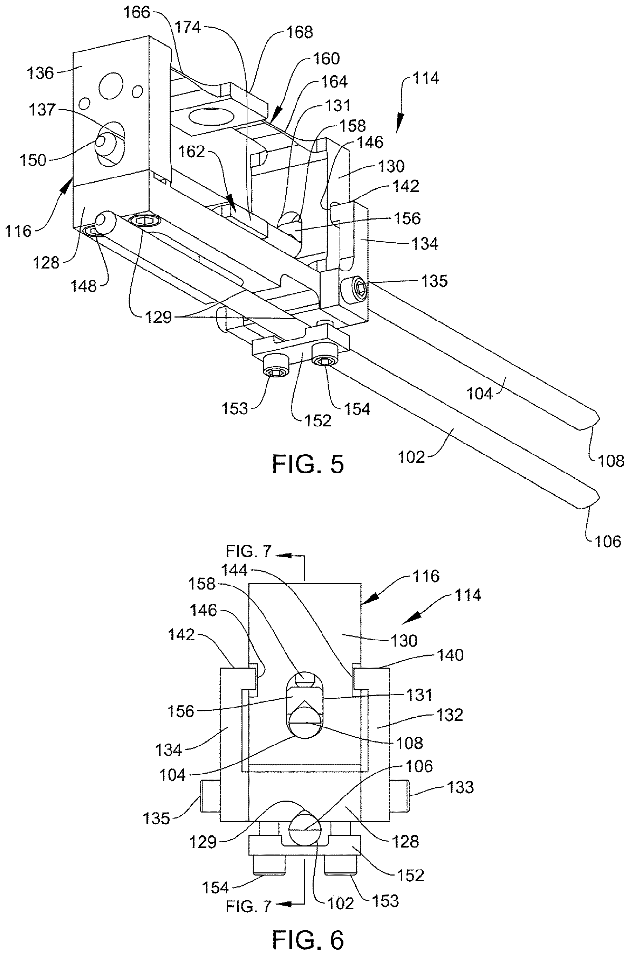

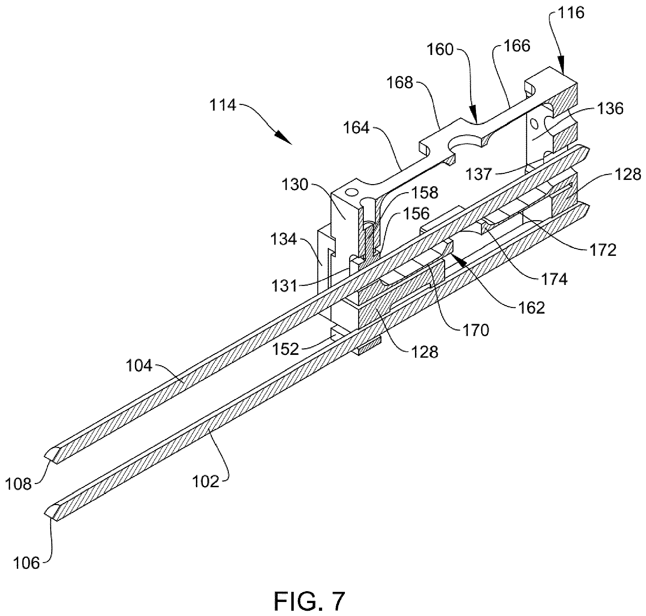

FIG. 3 is a top, front perspective view of extensometer structure 114 illustrated in FIGS. 1 and 2. FIG. 4 is a top, back perspective view, FIG. 5 is a bottom, back perspective view and FIG. 6 is a front view of FIG. 3. FIG. 7 is a top, front perspective section view taken through the section line indicated in FIG. 6. Features of flexure assembly 116 of extensometer structure 114 function as a compliant spring as well as allow second elongated rod 104 to move vertically in a substantially parallel manner relative to first elongated rod 102 while contacting a specimen.

Flexure assembly 116 includes a first contact device mount 128 that extends from a front to a back of flexure assembly 116 at support mount 136 and a second contact device mount 130 coupled to the support mount 136 with an upper flexure arm 160 and a lower flexure arm 162. The second contact device mount 130 moves vertically with respect the first contact device mount 128 by way of flexing of the flexure arms 160, 162. As illustrated in FIG. 5, a back of first contact device mount 128 may be rigidly fixed to support mount 136 for example by a fastener such as a pair of mechanical fasteners 138 and 139, adhesive, welding or the like, or formed with flexure assembly 116 from a single unitary body.

If desired, an overtravel stop can be provided to limit a range of movement of the second contact device mount 130 relative to the first contact device mount 128. Generally, the overtravel stop allows the second contact device mount 130 to move freely with movement limited by contact of surfaces that prevent further movement. In the embodiment illustrated, the overtravel stop comprises a pair of first and second overtravel stops 132 and 134. Overtravel stops 132 and 134 are each fixed to the front of first contact device mount 128 and on opposing sides of first contact device mount 128 and include first and second flanges 140 and 142. As illustrated, overtravel stops 132 and 134 may be rigidly fixed to the sides of first contact device mount by mechanical fasteners 133 and 135.

Second contact device mount 130 is configured to vertically travel relative to first contact device mount 128 and back support mount 136 and includes a pair of first and second grooves 144 and 146 that are recessed into second contact device mount 130. Grooves 144 and 146 are configured to receive free ends of first and second flanges 140 and 142. First groove 144 is located on a first side of mount 130 and a free end of first flange 140 moves within first groove 144. Second groove 146 is located on a second opposing side of mount 130 and a free end of second flange 142 moves within second groove 146. In this way, grooves 144 and 146 define the distance to which second contact device mount 130 can move relative to first contact device mount 128 and thereby accommodate the tension and compression travel margin on either side of second contact device mount 130. FIG. 6 best illustrates this relative distance by showing a spaced distance between tops of flanges 140 and 142 and tops of grooves 144 and 146 and a spaced distance between bottoms of flanges 140 and 142 and bottoms of grooves 144 and 146. In other words, overtravel stops 132 and 134 in combination with grooves 144 and 146, respectively, provide limited travel of second contact device mount 130 relative to first contact device mount 128. In addition, overtravel stops 132 and 134 limit lateral movement of the second contact device mount 130 relative to the first contact device mount 128, and thus lateral movement of the flexure arms 160 and 162 due to, for example, the first and second elongated rods 102 and 104 moving side-to-side and/or twisting.

First and second elongated rods 102 and 104 are coupled to flexure assembly 116. As illustrated, first elongated rod 102 is stationary and extends from a contact device end 106 to a proximal end 148. Second elongated rod 104 is configured to move or be displaced upwards and downwards in a substantially parallel manner relative to stationary first elongated rod 102 and extends from contact device end 108 to a proximal end 150. First elongated rod 102 is made stationary by being rigidly fixed to an underside of first contact device mount 128 along a channel 129 that is recessed into portions of a bottom surface of first contact device mount 128. At the front of first contact device mount 128, a rod support block 152, which includes its own channel for holding rod 102, is used to hold first elongated rod 102 in channel 129 of first contact device mount 128. For example and as illustrated, rod support block 152 may rigidly fix first elongated rod 102 to first contact device mount 128 with mechanical fasteners 153 and 154.

Second elongated rod 104 extends through a slot 131 in second contact device mount 130 and through a slot 137 in support mount 136. While second elongated rod 104 can move within slot 137 of support mount 136, second elongated rod 104 is fixed in slot 131 of movable second contact device mount 130. In the illustrated embodiment, a V-block 156 and a set screw 158 (illustrated in FIGS. 5, 6 and 7) provide a hold down or clamping force to second elongated rod 104. In this way, second elongated rod 104 is configured to vertically travel with second contact device mount 130 in a substantially parallel manner relative to first elongated rod 102 that is rigidly mounted to first contact device mount 128.

While, flexure assembly 116 further includes upper flexure arm 160 and lower flexure arm 162, it is possible for flexure assembly 116 to include one flexure arm. As illustrated, second contact device mount 130 is coupled to support mount 136 by upper flexure arm 160 and lower flexure arm 162. Flexure arms 160 and 162 are spaced apart from and in alignment with each other and upper flexure arm 160 is arranged directly above lower flexure arm 162. In the illustrated embodiment, a longitudinal axis 160A along a midline of the upper flexure arm 160 is substantially aligned with a longitudinal axis 162A along a midline of the lower flexure arm 162. Preferably, longitudinal axes 160A and 162A are also substantially aligned with longitudinal axes of the rods 102 and 104. Both upper flexure arm 160 and lower flexure arm 162 are coupled to second contact device mount 130 at front ends and are coupled to support mount 136 at back ends. In addition, upper flexure arm 160 is located above second elongated rod 104 and lower flexure arm 162 is located below second elongated rod 104. In one embodiment, second contact device mount 130, back support mount 136, upper flexure arm 160 and lower flexure arm 162 may all be made integral, or formed of a single unitary body.

Upper flexure arm 160 and lower flexure arm 162 allow second elongated rod 104 to travel in response to compression or elongation of the test specimen and to handle the moment created by the contacting force or shear force at contact surfaces 106 and 108 of rods 102 and 104. Upper flexure arm 160 includes a first flexure strap 164, a second flexure strap 166 and a rigid interconnecting section 168 that couples first flexure strap 164 to second flexure strap 166. Lower flexure arm 162 includes a first flexure strap 170, a second flexure strap 172 and a rigid interconnecting section 174 that couple first flexure strap 170 to second flexure strap 172. While FIGS. 1-7 illustrate upper and lower flexure arms 160 and 162 as having two flexure straps connected by a rigid interconnecting section, other variations are possible including a single flexure strap or more than two flexure straps with interconnecting sections. One purpose of the length of each of upper and lower flexure arms 160 and 162 is to position back assembly 110 as far away from shield 112 as possible by extending the length of flexure assembly 116 and the lengths of rods 102 and 104. In this way, operator ease of assembly is possible. In addition, flexure assembly 116 comprises thin flexure straps 164, 166, 170 and 172, which makes it as light weight as possible by eliminating excessive joints that are held together with heavy mechanical fasteners.

In some embodiments, one or more strain sensor gauges, not shown in FIGS. 1-7, are provided on the flexure arms 160 and 162 to sense movement of second elongated rod 104 relative to first elongated rod 102 or movement of second contact device mount 130 relative to first contact device mount 128. In other embodiments, other forms of sensors sense movement of rod 104 relative to rod 102. For instance, sensors based on changes in capacitive, inductance or resistance can be used. Likewise, optical based sensors can be used if desired. Such sensing devices are well known. The aspects herein disclosed are not dependent on the type of sensors or sensing devices used; however, strain sensor gauges will be described.

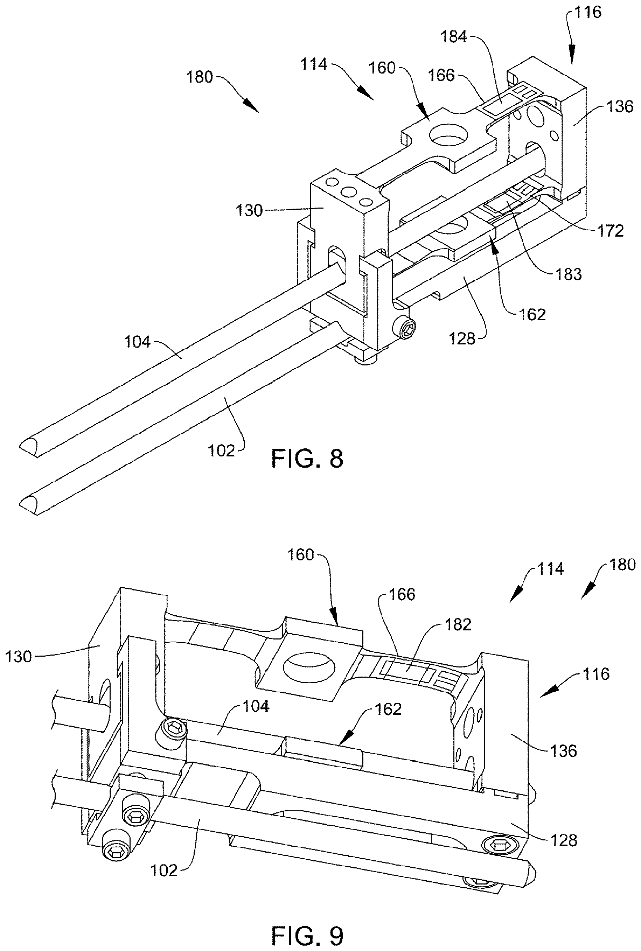

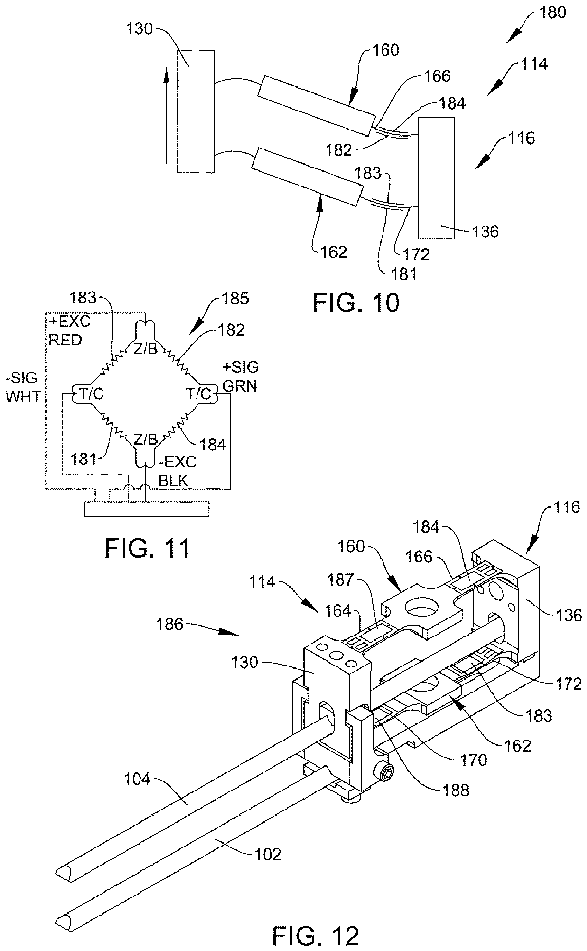

FIG. 8 is a top, front perspective view of a sensing assembly 180 according to an embodiment and configured for use in extensometer assembly 100 and therefore extensometer structure 114. FIG. 9 is a bottom perspective view of a portion of sensing assembly 180 and FIG. 10 is a schematic diagram of the portion of sensing assembly 180 illustrated in FIG. 9. In the embodiment illustrated in FIGS. 8-10, four strain sensor gauges are used to sense the displacement of second contact device mount 130 and therefore the displacement of second elongated rod 104. In particular, a first strain sensor gauge 181 (FIG. 10) is applied to a bottom or outer facing surface of second flexure strap 172 of lower flexure arm 162 to measure strain therein, a second strain sensor gauge 182 is applied to a bottom or inner facing surface of second flexure strap 166 of upper flexure arm 160 to measure strain therein, a third strain sensor gauge 183 is applied to a top or inner facing surface of second flexure strap 172 of lower flexure arm 162 to measure strain therein and a fourth strain sensor gauge 184 is applied to a top or outer facing surface of second flexure strap 166 of upper flexure arm 160 to measure strain therein.

FIG. 11 is a schematic diagram of a sensing circuit 185 that corresponds with sensing assembly 180. Sensing circuit 185 is a Wheatstone bridge circuit. As illustrated, the Wheatstone bridge circuit has two excitation voltage terminals and two output or signal terminals. As shown, the strain sensor gauges 181 and 182 that sense typically strain tension oppose each other and the strain sensor gauges 183 and 184 that sense typically strain compression oppose each other.

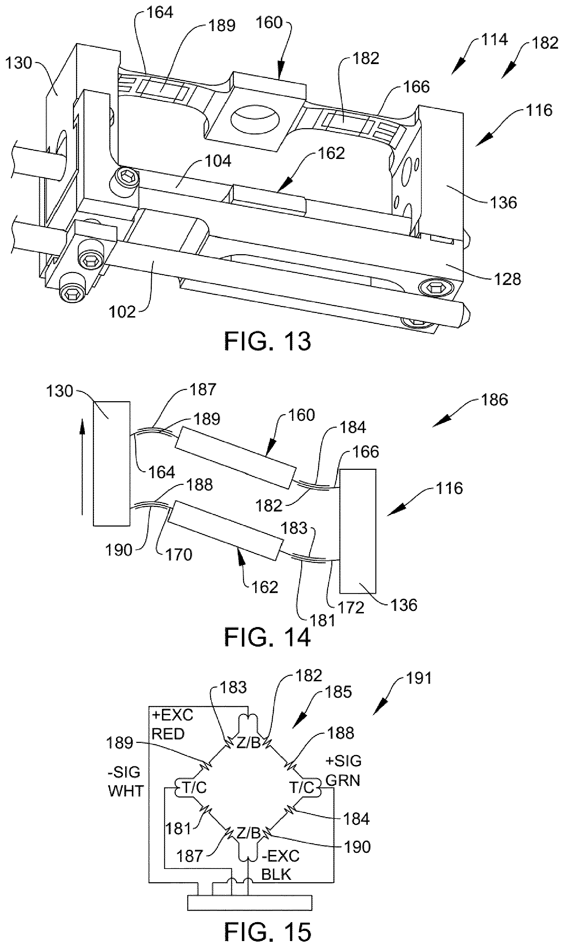

FIG. 12 is a top, front perspective view of a sensing assembly 186 according to an embodiment and configured for use in extensometer assembly 100 and therefore extensometer structure 114. FIG. 13 is a bottom perspective view of a portion of sensing assembly 186 and FIG. 14 is a schematic diagram of the portion of sensing assembly 186 illustrated in FIG. 14. In the embodiment illustrated in FIGS. 12-14, eight strain sensor gauges are used to sense the displacement of second contact device mount 130 and therefore the displacement of second elongated rod 104. In particular, a first strain sensor gauge 181 (FIG. 14) is applied to a bottom or outer facing surface of second flexure strap 172 of lower flexure arm 162 to measure strain therein, a second strain sensor gauge 182 is applied to a bottom or inner facing surface of second flexure strap 166 of upper flexure arm 160 to measure strain therein, a third strain sensor gauge 183 is applied to a top or inner facing surface of second flexure strap 172 of lower flexure arm 162 to measure strain therein and a fourth strain sensor gauge 184 is applied to a top or outer facing surface of second flexure strap 166 of upper flexure arm 160 to measure strain therein. In addition, a fifth strain sensor gauge 187 is applied to a top or outer facing surface of first flexure strap 164 of upper flexure arm 160 to measure strain therein, a sixth strain sensor gauge 188 is applied to a top or inner facing surface of first flexure strap 170 of lower flexure arm 162 to measure strain therein, a seventh strain sensor gauge 189 is applied to a bottom or inner facing surface of first flexure strap 164 of upper flexure arm 160 to measure strain therein, an eighth strain sensor gauge 190 (FIG. 14) is applied to a bottom or outer facing surface of first flexure strap 170 of lower flexure arm 162 to measure strain therein.

FIG. 15 is a schematic diagram of a sensing circuit 191 that corresponds with sensing assembly 185. Sensing circuit 191 is a Wheatstone bridge circuit. As illustrated, the Wheatstone bridge circuit has two excitation voltage terminals and two output or signal terminals. As shown, the strain sensor gauges 181 and 182 that typically sense strain tension on second flexure straps 172 and 166 oppose each other and the strain sensor gauges 183 and 184 that typically sense strain compression on second flexure straps 172 and 166 oppose each other, while the strain sensor gauges 187 and 188 that typically sense strain tension on first flexure straps 170 and 164 oppose each other and the strain sensor gauges 189 and 190 that typically sense strain compression on first flexure straps 170 and 164 oppose each other. It should be recognized that other embodiments of strain sensor gauges are possible. For example, the two strain sensor gauges 181 and 187 that typically measure strain tension on outer facing surfaces of flexure straps 172 and 164 could be used in a circuit that opposes each other and the two strain sensor gauges 184 and 190 that typically measure strain compression on outer facing surfaces of flexure straps 166 and 170 could be used in a circuit that opposes each other. In another example, the two strain sensor gauges 182 and 188 that typically measure strain tension on inner facing surfaces of flexure straps 166 and 170 could be used in a circuit that opposes each other and the two strain sensor gauges 183 and 189 that typically measure strain compression on inner facing of flexure straps 172 and 164 could be used in a circuit that opposes each other.

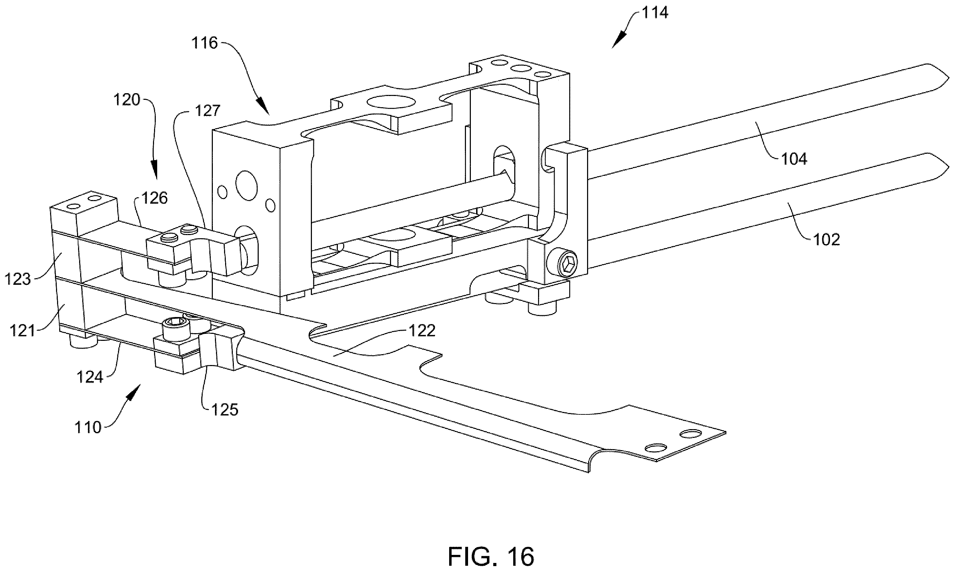

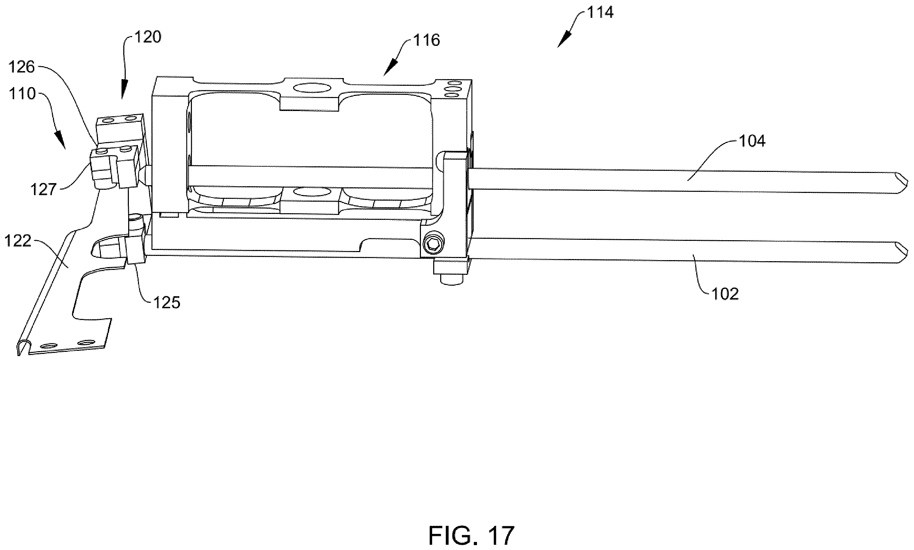

FIG. 16 is a top, back perspective view of extensometer structure 114 and back assembly 110 of extensometer assembly 100 and FIG. 17 is a top, side perspective view of FIG. 16. As previously discussed, extensometer structure 114 is supported by back assembly 110, where a hold down system 120 is configured to exert a contact force on the specimen through extensometer structure 114 and provide a lifting force to extensometer structure 114. As shown in FIGS 16 and 17, hold down system 120 includes a support bridge 122 that provides support to a lower flexible bridge 124 and an upper flexible bridge 126. Lower flexible bridge 124 couples support bridge 122 by a lower bridge mount 121 and upper flexible bridge 126 couples to support bridge 122 by an upper bridge mount 123. The opposing ends of lower flexible bridge 124 and upper flexible bridge 126 couple to one of the proximal ends of first elongated rod 102 and second elongated rod 104. In particular, lower flexible bridge 124 couples to first elongated rod 102 through a first proximal end mount 125 and upper flexible bridge 126 couples to second elongated rod 104 through a second proximal end mount 127.

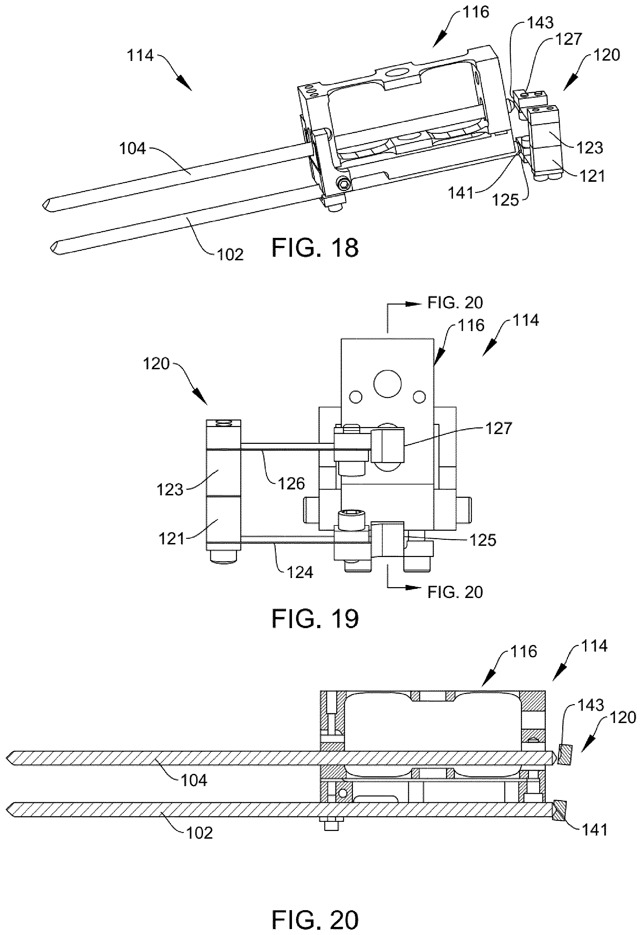

FIG. 18 is a top, front perspective view of extensometer structure 114 and a portion of hold down system 120 of extensometer assembly 100 illustrated in FIGS. 16 and 17. FIG. 19 is a back view of FIG. 18 and FIG. 20 is a section view taken through the section line indicated in FIG. 19. Each of first proximal end mount 125 and second proximal end mount 127 includes a dimple or socket 141 and 143, respectively, that is configured to receive a proximal end of one of the elongated rods 102 and 104. As shown in FIG. 20, dimple 141 of first proximal end mount 125 is configured to receive proximal end 148 of first elongated rod 102 and dimple 143 of second proximal end mount 127 is configured to receive proximal end 150 of second elongated rod 104. First proximal end mount 125 and second proximal end mount 127 are assembled such that each dimple 141 and 143 provides a lifting and contact force to extensometer structure 114 via first and second elongated rods 102 and 104, but allows first and second elongated rods 103 and 104 to move within dimple or socket 141 and 143. For example, dimples or sockets 141 and 143 may include a 120-degree angle opening and proximal ends 148 and 150 may provide a 90-degree end. In this way, contact of the 90-degree ends with surfaces of the respective sockets 141 and 143 is minimal but allows for any slight misalignment but still provide the requisite lifting support and contact force.

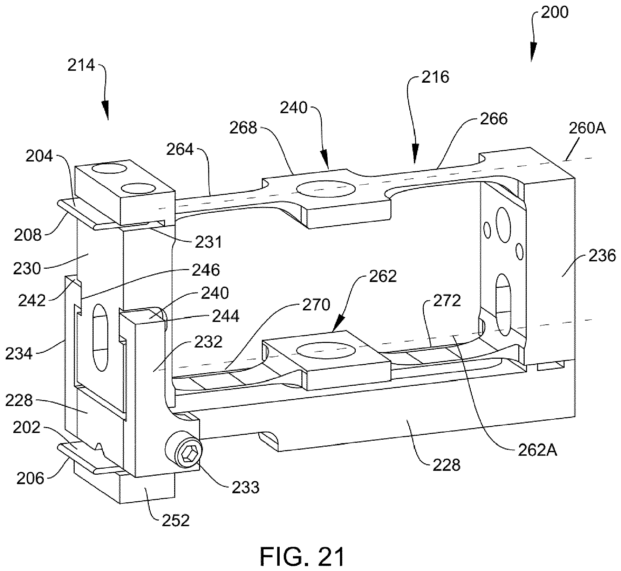

FIG. 21 is a top, front perspective view of an extensometer structure 214 including a flexure assembly 216 of a contact extensometer assembly 200 according to another embodiment. Rather than extensometer structure 214 having first and second elongated rods, contact extensometer 200 senses strain of a specimen by having exemplary first and second knife-edge blades 202 and 204 that engage the specimen at contact points or contact surfaces located at distal ends 206 and 208 of knife-edge blades 202 and 204. Features of flexure assembly 216 of extensometer structure 214 function as a compliant spring as well as allow second knife-edge blade 204 to move vertically in a parallel fashion relative to first knife-edge blade 202 while contacting a specimen. Extensometer structure 214 is commonly supported by a test specimen with clips and bands, such as shown in U.S. Patent No. 5,600,895 and thus the hold down system 120 is not needed.

Flexure assembly 216 includes a first contact device mount 228 that extends from a front to a back of flexure assembly 216 at support mount 236, a second contact device mount 230 is coupled to the support mount 236 with an upper flexure arm 260 and a lower flexure arm 262. The second contact device mount 230 moves vertically with respect the first contact device mount 228 with flexing of the flexure arms 260, 262. A back of first contact device mount 128 may be rigidly fixed to support mount 136 for example by a fastener (not shown in FIG. 21 but similar to fasteners 138 and 139 in FIG. 5), adhesive, welding or the like, or formed with flexure assembly 216 from a single unitary body.

If desired, an overtravel stop can be provided to limit a range of movement of the second contact device mount 230 relative to the first contact device mount 228. Generally, the overtravel stop allows the second contact device mount 230 to move freely with movement limited by contact of surfaces that prevent further movement. In the embodiment illustrated, the overtravel stop comprises a pair of first and second overtravel stops 232 and 234. Overtravel stops 232 and 234 are each fixed to the front of first contact device mount 128 and on opposing sides of first contact device mount 228 and include first and second flanges 240 and 142. As illustrated, overtravel stops 232 and 234 may be rigidly fixed to the sides of first contact device mount by mechanical fasteners (of which one fastener 233 is illustrated in FIG. 21).

In addition, overtravel stops 232 and 234 limit lateral movement of the second contact device mount 230 relative to the first contact device mount 128, and thus lateral movement of the flexure arms 260 and 262 due to, for example, the first and second knife-edge blades 202 and 204 moving side-to-side and/or twisting.

First and second knife-edge blades 202 and 204 are coupled to flexure assembly 216. As illustrated, first knife-edge blade 202 is stationary and extends from a contact device end 206 to a proximal end (not shown). Second knife-edge blade 204 is configured to move or be displaced upwards and downwards in a substantially parallel manner relative to stationary first knife-edge blade 202 and extends from contact device end 208 to a proximal end (not shown). First knife-edge blade 202 is made stationary by being fixed to an underside of first contact device mount 228 by a blade support block 252. For example, blade support block 252 may fix first knife-edge blade 202 to first contact device mount 228 with mechanical fasteners.

Second knife-edge blade 204 extends into a slot 231 in second contact device mount 230 and is held down by mechanical fasteners that act as a clamp. Therefore, second knife-edge blade 204 is fixed in slot 231 of movable second contact device mount 230. In this way, second knife-edge blade 204 is configured to travel vertically with second contact device mount 230 and in a substantially parallel manner relative to first knife-edge blade 102 that is rigidly mounted to first contact device mount 228.

While flexure assembly 216 further includes an upper flexure arm 260 and a lower flexure arm 262, it is possible for flexure assembly 216 to include one flexure arm. As illustrated, second contact device mount 230 is coupled to support mount 236 by flexure arms 260 and 262 that are spaced apart from and in alignment with each other and upper flexure arm 260 is arrange directly above lower flexure arm 262. Both upper flexure arm 260 and lower flexure arm 262 are coupled to second contact device mount 230 at front ends and are coupled to back support mount 236 at back ends. Upper flexure arm 260 is spaced apart from and arranged or located above and in alignment with lower flexure arm 262. In the illustrated embodiment, a longitudinal axis 260A along a midline of the upper flexure arm 260 is substantially aligned with a longitudinal axis 262A along a midline of the lower flexure arm 262. Preferably longitudinal axes 260A and 262A are also substantially aligned with midlines of knife-edge blades 202 and 204. In one embodiment, second contact device mount 230, back support mount 236, upper flexure arm 260 and lower flexure arm 262 may all be made of the same integral material.

Upper flexure arm 260 and lower flexure arm 262 allow second knife-edge blade 204 to travel in response to compression or elongation of the test specimen and to handle the moment created by the contacting force or shear force at contact surfaces 206 and 208 of knife-edge blades 202 and 204. Upper flexure arm 260 includes a first flexure strap 264, a second flexure strap 266 and a rigid interconnecting section 268 that couples first flexure strap 264 to second flexure strap 266. Lower flexure arm 262 includes a first flexure strap 270, a second flexure strap 272 and a rigid interconnecting section 274 that couple first flexure strap 270 to second flexure strap 272. While FIG. 21 illustrates upper and lower flexure arms 260 and 262 as having two flexure straps connected together by a rigid interconnecting section, other variations are possible including a single flexure strap or more than two flexure straps with interconnecting sections. One purpose of the length of each of upper and lower flexure arms 260 and 262 is to position a back assembly that provides both a contacting and lifting force to extensometer structure 214 as far enough away from contact surfaces 206 and 208. In this way, operator ease of assembly is possible. In addition, flexure assembly 216 comprises thin flexure straps 264, 266, 270 and 272, which makes it as light weight as possible by eliminating excessive joints that are held together with heavy mechanical fasteners.

In some embodiments, one or more strain sensor gauges, not shown in FIG. 21, are provided on the flexure arms 260 and 262 to sense movement of second knife-edge blade 204 relative to first knife-edge blade 102 or movement of second contact device mount 230 relative to first contact device mount 228. Such configurations of strain sensor gauges are discussed above and illustrated in FIGS. 8-15. In other embodiments, other forms of sensors sense movement of blade 104 relative to blade 102. For instance, sensors based on changes in capacitive, inductance or resistance can be used. Likewise, optical based sensors can be used if desired. Such sensing devices are well known. The aspects herein disclosed are not dependent on the type of sensors or sensing devices used, however, in embodiments where strains sensor gauges are used, the positioning of those strain sensor gauges and the corresponding sensing circuit used are important.

Although the present invention has been described with reference to preferred embodiments, workers skilled in the art will recognize that changes may be made in form and detail without departing from the spirit and scope of the invention.

## Claims

1. An extensometer structure comprising:
a flexure assembly comprising:
a support mount;
a first contact device mount rigidly fixed to the support mount; and
a second contact device mount coupled to the support mount by an upper flexure arm and a lower flexure arm, wherein the upper flexure arm is spaced apart from and arranged directly above and in alignment with the lower flexure arm; and
wherein the second contact device mount is configured to vertically travel relative to the first contact device mount.

2. The extensometer structure of claim 1, further comprising a first contact probe having a contact surface and being fastened to the first contact device mount and a second contact probe having a contact surface and being fastened to the second contact device mount, wherein the second contact probe is configured to vertically travel in a substantially parallel manner relative to the first contact probe.

3. The extensometer structure of claim 2, wherein the first contact probe and the second contact probe comprise first and second elongated rods, wherein the first elongated rod is mounted to the first contact device mount and extends from a contact surface along an underside of first contact device mount and an under side of the support mount and terminates at a proximal end and wherein the second elongated rod is mounted to the second contact device mount and extends from a contact surface through a slot in the second contact device mount, between the upper and lower flexure arms and through a slot in the support mount to a proximal end.

4. The extensometer structure of claim 2, wherein the first contact probe and the second contact probe comprise first and second knife-edge blades, wherein the first knife-edge blade is mounted to a front end and underside of first contact device mount by a blade mount and second knife-edge blade is clamped into a slot that is recessed from a front face of the second contact device mount.

5. The extensometer structure of any of claims 1-4, wherein the flexure assembly further comprises at least one overtravel stop.

6. The extensometer structure of claim 5, wherein the at least one overtravel stop comprises a first overtravel stop mounted to the first contact device mount and having a first flange with a free end that moves within a first groove recessed in the second contact device mount and a second overtravel stop mounted to the first contact device mount and having a second flange with a free end that moves within a second groove recessed in the second contact device mount, wherein the first and second overtravel stops provide limited travel of the second contact device mount relative to the first contact device mount.

7. The extensometer structure of any of claims 1-6, wherein the upper flexure arm comprises a first flexure strap, a second flexure strap and a rigid interconnecting section coupling the first flexure strap to the second flexure strap and wherein the lower flexure arm comprises a first flexure strap, a second flexure strap and a rigid interconnecting section coupling the first flexure strap to the second flexure strap.

8. The extensometer structure of any of claims 1-7, further comprising one or more sensors configured to sense movement of second contact device mount relative to the first contact device mount, wherein in a first embodiment the one or more sensors comprises four strain gauge sensors, wherein first and second strain gauge sensors are positioned on the upper flexure arm and wherein third and fourth strain gauge sensors are positioned on the lower flexure arm, and wherein in a second embodiment the one or more sensors comprises eight strain gauge sensors, wherein first, second, third and fourth strain gauge sensors are positioned on upper surfaces and lower surfaces of the upper flexure arm and wherein fifth, sixth, seventh and eighth strain gauge sensors are positioned on upper and lower surfaces of the lower flexure arm.

9. An extensometer structure comprising:
a first contact probe having a contact surface;
a second contact probe having a contact surface and being movably connected to the first contact probe;
a flexure assembly comprising:
a support mount;
a first contact device mount rigidly fixed to the support mount and configured to support the first contact probe, the first contact probe being mounted to the first contact device mount; and
a second contact device mount coupled to the support mount by an upper flexure arm and a lower flexure arm, the second contact probe being mounted to the second contact device mount; and
wherein the second contact device mount is configured to vertically travel relative to the first contact device mount and wherein the second contact probe is configured to vertically travel relative to the first contact probe.

10. The extensometer structure of claim 9, wherein the first contact probe and the second contact probe comprise first and second elongated rods, wherein the first elongated rod is mounted to the first contact device mount and extends from the contact surface of the first elongated rod along an underside of first contact device mount and an under side of the support mount and terminates at a proximal end and wherein the second elongated rod is mounted to the second contact device mount and extends from the contact surface of the second elongated rod through a slot in the second contact device mount, between the upper and lower flexure arms and through a slot in the support mount to a proximal end.

11. The extensometer structure of any of claims 9-10, wherein the flexure assembly further comprises at least one overtravel stop.

12. The extensometer structure of any of claims 9-11, wherein the upper flexure arm is spaced apart from and arranged directly above and in alignment with the lower flexure arm, and wherein in one embodiment the upper flexure arm comprises a first flexure strap, a second flexure strap and an interconnecting section coupling the first flexure strap to the second flexure strap and wherein the lower flexure arm comprises a first flexure strap, a second flexure strap and an interconnecting section coupling the first flexure strap to the second flexure strap.

13. An extensometer assembly comprising:
an extensometer structure comprising:
a first elongated rod extending from a contact surface to a proximal end;
a second elongated rod extending from a contact surface to a proximal end; and
a flexure assembly having at least one flexure arm and including a support mount, a first contact device mount rigidly fixed to the support mount and a second contact device mount coupled to the support mount by the at least one flexure arm, wherein the first elongated rod is mounted to the first contact device mount and the second elongated rod is mounted to the second contact device mount; and
a hold down system coupled to the proximal ends of the first and second elongated rods to provide a lifting force and contacting force of the first and second elongated rods upon a test specimen.

14. The extensometer assembly of claim 13, wherein the at least one flexure arm comprises an upper flexure arm and a lower flexure arm, the upper flexure arm being spaced apart from and in alignment with the lower flexure arm.

15. The extensometer assembly of claim 14, wherein the first elongated rod extends from the contact surface of the first elongated rod along an underside of first contact device mount and an underside of the support mount and terminates at the proximal end of the first elongated rod and wherein the second elongated rod extends from the contact surface of the second elongated rod through a slot in the second contact device mount, between the upper and lower flexure arms and through a slot in the support mount to the proximal end of the second elongated rod.
